# EUROPEAN PATENT APPLICATION

(11) **EP 3 217 133 A1**
(43) Date of publication of application: **13.09.2017**
(21) Application number: 15856324.7
(22) Date of filing: 28.10.2015
(51) Int. Cl.: F28D 20/00, F01N 5/02

(54) **CHEMICAL HEAT STORAGE APPARATUS**

(30) Priority: 07.11.2014 JP 2014226766; 07.11.2014 JP 2014226765
(71) Applicant: Kabushiki Kaisha Toyota Jidoshokki, Kariya-shi, Aichi 448-8671 (JP)
(72) Inventor: NOGUCHI, Yukihiro, Kariya-shi Aichi 448-8671 (JP); KAWAUCHI, Hiroyasu, Kariya-shi Aichi 448-8671 (JP); MORI, Kenji, Kariya-shi Aichi 448-8671 (JP); SATAKE, Yasushi, Kariya-shi Aichi 448-8671 (JP); MURASAKI, Takanori, Kariya-shi Aichi 448-8671 (JP)
(74) Representative: TBK
(86) International application number: PCT/JP2015/080423
(87) International publication number: WO 2016/072331

(57) **Abstract**

A chemical heat storage apparatus includes a reactor including a reaction material that generates heat by chemically reacting with a reaction medium and desorbs the reaction medium by storing heat; a reservoir that stores the reaction medium; a feed pipe connecting the reactor with the reservoir; a valve provided in the feed pipe that opens and closes a flow path of the reaction medium; a pressure sensor that detects pressure in the reservoir; and a leakage determination unit that determines whether the reaction medium is leaking from the reactor based on the pressure in the reservoir detected by the pressure sensor. The leakage determination unit determines that the reaction medium is leaking from the reactor if the pressure in the reservoir detected by the pressure sensor is lower than an abnormality determination threshold after an abnormality determination time has elapsed after the valve has opened to perform a heat generating reaction in which the reaction medium is fed from the reservoir to the reactor.

## Description

### Technical Field

One aspect of the present invention relates to a chemical heat storage apparatus.

### Background Art

For example, an apparatus described in Patent Literature 1 is known as a conventional chemical heat storage apparatus. The chemical heat storage apparatus described in Patent Literature 1 is used in an exhaust gas purification system. When the temperature of exhaust gas emitted from an internal combustion engine is low, the exhaust gas purification system uses heat generated by a chemical reaction between a reaction material and a reaction medium (NH₃) to heat an heat exchanger provided in an exhaust system of the internal combustion engine of a vehicle so as to raise the temperature of the exhaust gas passing through the heat exchanger to a temperature (activation temperature) at which an exhaust gas purification catalyst located downstream exerts a purifying capability. When the temperature of the internal combustion engine has sufficiently risen and the exhaust gas temperature has been raised, the exhaust gas purification system transfers the heat of the exhaust gas to the reaction material through the heat exchanger to desorb the reaction medium from the reaction material, and recovers the desorbed reaction medium.

In such a chemical heat storage apparatus, when the temperature of the exhaust gas emitted from the internal combustion engine is lower than a predetermined temperature, the NH₃ stored in a reservoir is fed to a reactor through a feed pipe, and the NH₃ thus fed chemically reacts with the reaction material in the reactor to generate the heat. This heat heats the heat exchanger, through which the exhaust gas in an exhaust pipe is warmed. When the temperature of the exhaust gas emitted from the internal combustion engine is higher than the predetermined temperature, the reaction material in the reactor is heated by heat of the exhaust gas through the heat exchanger, and the NH₃ is desorbed from the reaction material in the reactor. The NH₃ thus desorbed is recovered into the reservoir through the feed pipe.

### Citation List

### Patent Literature

Patent Literature 1: Japanese Unexamined Patent Publication No. 2014-85093

### Summary of Invention

### Technical Problem

In the conventional technique described above, the reactor and the feed pipe are connected together by welding. When the reaction medium is fed from the reservoir to the reactor, the reaction medium can leak through a portion connected by the welding due to, for example, vibration of a vehicle or contact of the vehicle with an obstacle. The reaction medium can leak from the reactor also due to opening of a hole at the reactor itself. Since the leakage of the reaction medium from the reactor reduces the amount of the reaction medium for generating the heat through the reaction with the reaction material in the reactor, the exhaust gas in the exhaust pipe cannot be sufficiently warmed, and warm-up performance of the catalyst could deteriorate. Hence, the leakage of the reaction medium from the reactor needs to be detected. However, since the outside of the reactor is an open system, the reaction medium itself leaked out of the reactor is difficult to be detected.

In the conventional technique described above, the reservoir and the feed pipe are also connected together by welding. The reaction medium can leak through a portion connected by the welding under the influence of, for example, the vibration of the vehicle or the contact of the vehicle with the obstacle. The reaction medium can leak from the reservoir also due to opening of a hole at the reservoir itself. Since the leakage of the reaction medium from the reservoir reduces the amount of the reaction medium for generating the heat through the reaction with the reaction material in the reactor, the exhaust gas in the exhaust pipe cannot be sufficiently warmed, and the warm-up performance of the catalyst could deteriorate. Hence, the leakage of the reaction medium from the reservoir needs to be detected. However, since the outside of the reservoir is an open system, the reaction medium itself leaked out of the reservoir is difficult to be detected.

It is an object of one aspect of the present invention to provide a chemical heat storage apparatus capable of surely detecting the leakage of a reaction medium from a reactor.

### Solution to Problem

A chemical heat storage apparatus according to one aspect of the present invention includes a reactor including a reaction material configured to generate heat by chemically reacting with a reaction medium and to desorb the reaction medium by storing heat; a reservoir configured to store the reaction medium; a feed pipe connecting the reactor with the reservoir; a valve provided in the feed pipe and configured to open and close a flow path of the reaction medium; a pressure sensor configured to detect pressure in the reservoir; and a leakage determination unit configured to determine whether the reaction medium is leaking from the reactor based on the pressure in the reservoir detected by the pressure sensor. The leakage determination unit is configured to determine that the reaction medium is leaking from the reactor if the pressure in the reservoir detected by the pressure sensor is lower than an abnormality determination threshold after an abnormality determination time has elapsed after the valve has opened to perform a heat generating reaction in which the reaction medium is fed from the reservoir to the reactor.

In the chemical heat storage apparatus according to one aspect of the present invention, when the heat generating reaction is performed in which the reaction medium is fed from the reservoir to the reactor through the feed pipe, the reaction medium is determined to be leaking from the reactor if the pressure in the reservoir is lower than the abnormality determination threshold after the abnormality determination time has elapsed after the valve has opened. In this manner, use of the pressure in the reservoir as an indicator during the heat generating reaction enables the sure detection of the leakage of the reaction medium from the reactor.

The abnormality determination threshold may be set to a value lower than the pressure in the reservoir when the reaction system reaches an equilibrium state in a normal condition where the reaction medium is not leaking from the reactor, and the abnormality determination time may be set as a time longer than a time until the reaction system reaches the equilibrium state in the normal condition where the reaction medium is not leaking from the reactor. When the heat generating reaction reaches the equilibrium state in the normal condition, the pressure in the reservoir and the pressure in the reactor reach a constant equilibrium pressure level. Consequently, with this configuration, the reaction medium is determined to be leaking from the reactor if the pressure in the reservoir after the abnormality determination time has elapsed after the valve has opened is lower than the abnormality determination threshold that is lower than the equilibrium pressure when the reaction system reaches the equilibrium state in the normal condition. In this manner, the leakage of the reaction medium from the reactor can be easily detected using the equilibrium pressure during the heat generating reaction in the normal condition as a reference.

The chemical heat storage apparatus according to one aspect of the present invention further includes a first storage amount calculation unit configured to calculate a storage amount of the reaction medium in the reservoir when the valve has closed after the reaction medium has been recovered from the reactor into the reservoir; a second storage amount calculation unit configured to calculate the storage amount of the reaction medium in the reservoir after a predetermined time has elapsed after the valve has closed; and a leakage determination unit configured to determine whether the reaction medium is leaking from the reservoir based on the storage amounts of the reaction medium calculated by the respective first and second storage amount calculation units. The leakage determination unit is configured to calculate a difference between the storage amount of the reaction medium calculated by the first storage amount calculation unit and the storage amount of the reaction medium calculated by the second storage amount calculation unit, and to determine that the reaction medium is leaking from the reservoir when the value of the difference is larger than a predetermined value.

In the chemical heat storage apparatus according to one aspect of the present invention, the reaction medium is determined to be leaking from the reservoir if the storage amount of the reaction medium calculated after the predetermined time has elapsed after the valve has closed is smaller, by the predetermined value or more, than the storage amount of the reaction medium calculated when the valve has closed after the reaction medium has been recovered from the reactor into the reservoir through the feed pipe. In this manner, use of the difference in the storage amount of the reaction medium in the reservoir as an indicator enables the sure detection of the leakage of the reaction medium from the reservoir.

A temperature sensor configured to detect a temperature in the reservoir and a pressure sensor configured to detect the pressure in the reservoir may be provided, and each of the first and second storage amount calculation units may be configured to calculate the storage amount of the reaction medium based on the temperature in the reservoir detected by the temperature sensor and the pressure in the reservoir detected by the pressure sensor. In this case, since the storage amount of the reaction medium is calculated taking into account variations in both the temperature and the pressure in the reservoir, the storage amount of the reaction medium can be correctly calculated. As a result, the leakage of the reaction medium from the reservoir can be surely detected.

Each of the first and second storage amount calculation units may be configured to calculate saturation vapor pressure of the reaction medium based on the temperature in the reservoir detected by the temperature sensor, and to calculate the storage amount of the reaction medium based on relative pressure between the saturation vapor pressure and the pressure in the reservoir detected by the pressure sensor. Such a configuration enables the easy calculation of the storage amount of the reaction medium based on the temperature and the pressure in the reservoir.

### Advantageous Effects of Invention

According to one aspect of the present invention, a chemical heat storage apparatus is obtained that is capable of surely detecting the leakage of a reaction medium from a reactor.

### Brief Description of Drawings

FIG. 1 is a schematic configuration diagram illustrating an exhaust gas purification system including a chemical heat storage apparatus according to a first embodiment of one aspect of the present invention.
FIG. 2 is a conceptual diagram illustrating a heat generating reaction and a recovery reaction in the chemical heat storage apparatus illustrated in FIG. 1.
FIG. 3 is a flowchart illustrating a procedure of a controller to detect leakage of NH₃ from a reactor.
FIG. 4 depicts graphs each illustrating a pressure change in an adsorber after an abnormality determination time has elapsed after a solenoid valve has opened.
FIG. 5 is a schematic configuration diagram illustrating the exhaust gas purification system including the chemical heat storage apparatus according to a second embodiment of one aspect of the present invention.
FIG. 6 is a flowchart illustrating a procedure of the controller to detect leakage of the NH₃ from the adsorber.
FIG. 7 depicts conceptual diagrams illustrating an operation to detect the leakage of the NH₃ from the adsorber.
FIG. 8 depicts diagrams illustrating a calculation method of NH₃ storage amounts performed by a first storage amount calculation unit and a second storage amount calculation unit.
FIG. 9 is a schematic configuration diagram illustrating the exhaust gas purification system including the chemical heat storage apparatus according to another embodiment of the present invention.

### Description of Embodiments

Hereinafter, embodiments of one aspect of the present invention will be described in detail with reference to the accompanying drawings. In the description, the same reference numeral will be used for the same elements or elements having the same function, and description thereof will not be repeated.

### First Embodiment

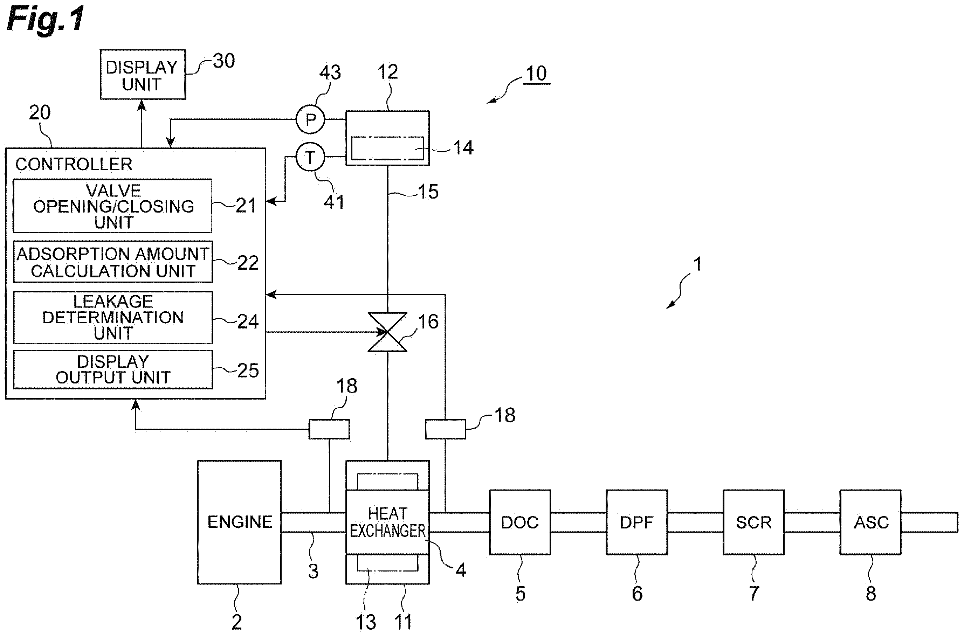

FIG. 1 is a schematic configuration diagram illustrating an exhaust gas purification system apparatus according to a first embodiment of one aspect of the present invention. In FIG. 1, an exhaust gas purification system 1 is provided in an exhaust system of a diesel engine 2 (hereinafter simply called an engine 2) serving as an internal combustion engine of a vehicle, and purifies exhaust gas emitted from the engine 2 of harmful substances (environmental pollutants) contained in the exhaust gas.

The exhaust gas purification system 1 includes a heat exchanger 4, an oxidation catalyst (diesel oxidation catalyst (DOC)) 5, a diesel exhaust particulate removal filter (diesel particulate filter (DPF)) 6, a selective reduction catalyst (selective catalytic reducer (SCR)) 7, and an oxidation catalyst (ammonia slip catalyst (ASC)) 8, which are sequentially arranged from the upstream side toward the downstream side in the midstream of an exhaust pipe 3 serving as an exhaust passage connected to the engine 2.

The heat exchanger 4 transfers heat between the exhaust gas from the engine 2 and a reaction material 13 described later. The heat exchanger 4 has, for example, a honeycomb structure. The DOC 5 purifies the exhaust gas by oxidizing, for example, HC. and CO contained therein. The DPF 6 collects and removes particulate matter (PM) contained in the exhaust gas. The SCR 7 purifies the exhaust gas by reducing NOx contained therein using urea water or ammonia (NH₃). The ASC 8 purifies the exhaust gas by oxidizing the NH₃ that has passed through the SCR 7 and flowed toward the downstream side of the SCR 7.

Exhaust gas temperature sensors 18 are disposed on the upstream side and the downstream side of the heat exchanger 4 at the exhaust pipe 3. The exhaust gas temperature sensors 18 detect temperatures of the exhaust gas from the engine 2 flowing in the exhaust pipe 3. The temperature information about the exhaust gas detected by the exhaust gas temperature sensors 18 is output to a controller 20 described later. The upstream side and the downstream side mentioned in the present embodiment refer to the upstream side and the downstream side in the direction of flow of the exhaust gas in the exhaust pipe 3.

The exhaust gas purification system 1 includes a chemical heat storage apparatus 10 that uses a reversible chemical reaction to heat (warm up) the heat exchanger 4 serving as an object to be heated without external energy. Specifically, the chemical heat storage apparatus 10 keeps the reaction material 13 described later and the reaction medium separated from each other so as to store therein the heat (exhaust heat) of the exhaust gas. The chemical heat storage apparatus 10 feeds, when needed, the reaction medium to the reaction material 13 to cause a chemical reaction (chemical adsorption) between the reaction medium and the reaction material 13, and uses reaction heat generated during the chemical reaction to heat the heat exchanger 4. In the present embodiment, the ammonia (NH₃) is used as the reaction medium.

The chemical heat storage apparatus 10 includes a reactor 11, an adsorber (reservoir) 12, a feed pipe 15 connecting the reactor 11 with the adsorber 12, a solenoid valve (valve) 16 provided in the feed pipe 15, the controller 20, a temperature sensor 41, and a pressure sensor 43.

The reactor 11 is disposed on a place around the exhaust pipe 3 corresponding to a portion in the exhaust pipe 3 in which the heat exchanger 4 is disposed. The reactor 11 includes the reaction material 13 that chemically reacts with the NH₃ serving as the gaseous reaction medium to generate heat and receives the exhaust heat to desorb the NH₃. The reaction material 13 disposed in the reactor 11 may be configured as molded pellets by being mixed therein with a thermally conductive material (not illustrated) that has higher thermal conductivity than the reaction material 13, and that serves as a thermal conduction path for conducting the heat generated by the reaction material 13 to the heat exchanger 4.

A halide represented by a compositional formula of MXa is used as the reaction material 13. Here, M denotes an alkaline-earth metal, such as Mg, Ca, or Sr, or a transition metal, such as Cr, Mn, Fe, Co, Ni, Cu, or Zn; X denotes Cl, Br, or I; and a denotes a number determined by the valence of M, which is two or three. A material, such as carbon fibers, carbon black, or a graphite sheet, is used as the thermally conductive material. The molded pellets are made by mixing the reaction material 13 with the thermally conductive material in a mold, and in this state, simultaneously applying a press molding process to the mixture to press it to be packed. The molded pellets may be made by mixing the reaction material 13 with a plurality of types of the thermally conductive materials, and applying the press molding process to the mixture.

The adsorber 12 includes an adsorbent 14 that can hold the NH₃ by physically adsorbing it and can desorb the NH₃. For example, activated carbon, carbon black, mesoporous carbon, nano-carbon, or zeolite is used as the adsorbent 14. The adsorber 12 physically adsorbs the NH₃ into the adsorbent 14 to store the NH₃.

The feed pipe 15 constitutes a feed flow path allowing the NH₃ to flow between the reactor 11 and the adsorber 12. The solenoid valve 16 is an on-off valve to open and close the flow path of the NH₃ between the reactor 11 and the adsorber 12. The solenoid valve 16 is controlled by the controller 20.

Each of the temperature sensor 41 and the pressure sensor 43 is provided, for example, in the adsorber 12. The temperature sensor 41 detects temperature in the adsorber 12. The pressure sensor 43 detects a pressure in the adsorber 12. The temperature information in the adsorber 12 detected by the temperature sensor 41 and the pressure information in the adsorber 12 detected by the pressure sensor 43 are output to the controller 20.

An adsorption amount calculation unit 22 calculates an adsorption amount of the NH₃ (hereinafter called "NH₃ adsorption amount") in the adsorber 12 based on the temperature in the adsorber 12 indicated by the temperature information output from the temperature sensor 41 and the pressure in the adsorber 12 indicated by the pressure information output from the pressure sensor 43. The NH₃ adsorption amount refers to the amount of NH₃ adsorbed by the adsorbent 14 in the adsorber 12.

Based on the pressure in the adsorber 12 detected by the pressure sensor 43, a leakage determination unit 24 determines whether the NH₃ is leaking from the reactor 11. As a result, the leakage of the NH₃ from the reactor 11 is detected. If the leakage determination unit 24 has determined that the NH₃ is leaking from the reactor 11, a display output unit 25 outputs the determination result to, for example, a display unit 30 mounted on the vehicle. Since the information indicating the determination result output from the display output unit 25 is displayed on the display unit 30, a driver of the vehicle can become aware that the NH₃ is leaking from the reactor 11. Details of an operation of the controller 20 to detect the leakage of the NH₃ from the reactor 11 will be described later.

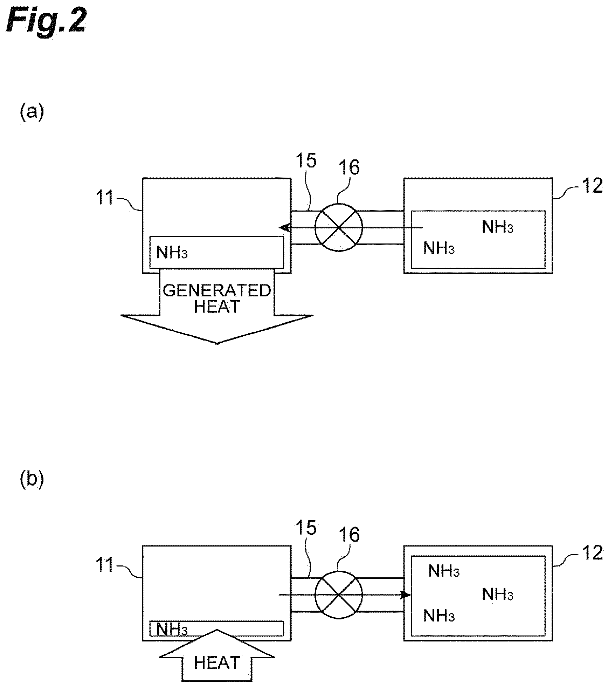

In the chemical heat storage apparatus 10 described above, when the temperature of the exhaust gas from the engine 2 is lower than a warm-up start temperature, the NH₃ is fed from the adsorber 12 to the reactor 11 through the feed pipe 15, and the reaction material 13 (such as MgCl₂) in the reactor 11 and the NH₃ chemically reacts with each other to cause the chemical adsorption (coordination bonding) therebetween, and the heat is generated from the reaction material 13. In other words, the reaction (heat generating reaction) from the left-hand side to the right-hand side in the following reaction equation (A) occurs (refer to FIG 2(a)). The heat generated in the reactor 11 heats the heat exchanger 4, and warms the exhaust gas through the heat exchanger 4. The warmed exhaust gas heats the DOC 5.

MgCl₂ + xNH3 ⇔ Mg(NH₃)xCl₂ + heat (A)

When, in contrast, the temperature of the exhaust gas from the engine 2 is higher than warm-up start temperature, the exhaust heat is transferred to the reaction material 13 in the reactor 11 through the heat exchanger 4, so that the NH₃ is desorbed from the reaction material 13. In other words, the reaction (recovery reaction) from the right-hand side to the left-hand side in the above reaction equation (A) occurs (refer to FIG. 2(b)). The NH₃ desorbed from the reaction material 13 returns from the reactor 11 to the adsorber 12 through the feed pipe 15, and is physically adsorbed (recovered) by the adsorbent 14 in the adsorber 12.

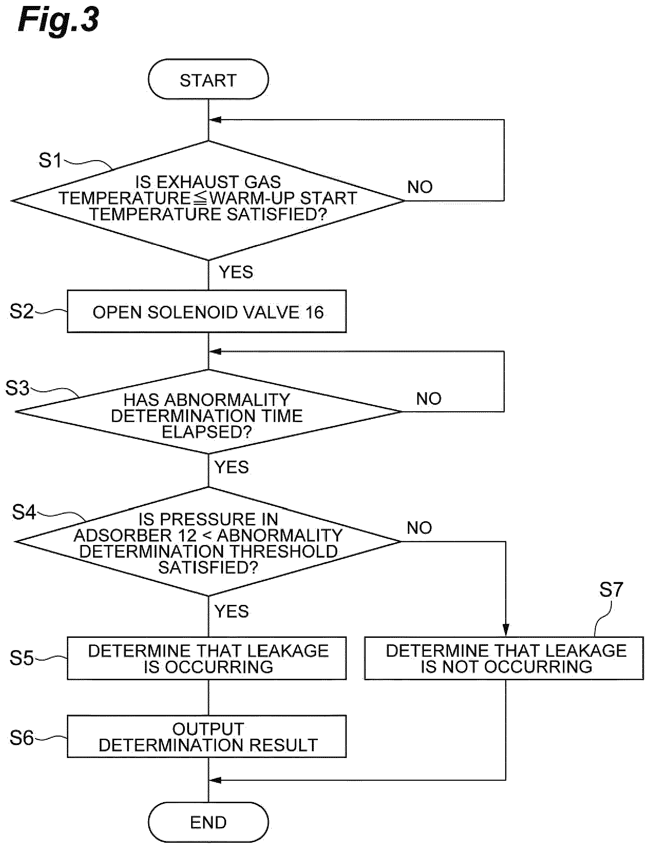

The following describes, with reference to FIG. 3, the operation of the controller 20 to detect the leakage of the NH₃ from the reactor 11 in the heat generating reaction in which the NH₃ is fed from the adsorber 12 to the reactor 11. FIG. 3 is a flowchart illustrating a procedure of the controller 20 to detect the leakage of the NH₃ from the reactor 11.

As illustrated in FIG. 3, after the engine has started, a valve opening/closing unit 21 first determines whether the temperature of the exhaust gas indicated by the temperature information output from the exhaust gas temperature sensors 18 is equal to or lower than the warm-up start temperature at which catalyst warm-up is required (S1). If the temperature of the exhaust gas is equal to or lower than the warm-up start temperature (Yes at S1), the valve opening/closing unit 21 transmits a signal for opening the solenoid valve 16 to the solenoid valve 16 so as to open the solenoid valve 16 (S2). As a result, the NH₃ moves from the adsorber 12 to the reactor 11 through the feed pipe 15; the pressure in the adsorber 12 decreases; and the heat generating reaction between the reaction material 13 and the NH₃ occurs in the reactor 11 (refer to FIG. 2(a)). If, in contrast, the temperature of the exhaust gas is higher than the warm-up start temperature (No at S1), the process returns to S1, and the valve opening/closing unit 21 keeps the solenoid valve 16 closed, and repeats the determination at S1 until the temperature of the exhaust gas becomes equal to or lower than the warm-up start temperature.

Subsequently to the processing at S2, the leakage determination unit 24 determines whether an abnormality determination time (such as approximately 20 seconds) has elapsed after the solenoid valve 16 has opened (S3). If the abnormality determination time has elapsed after the solenoid valve 16 opened (Yes at S3), the process goes to S4. If, in contrast, the abnormality determination time has not elapsed after the solenoid valve 16 opened (No at S3), the process returns to S3, and the leakage determination unit 24A repeats the determination at S3 until the abnormality determination time elapses.

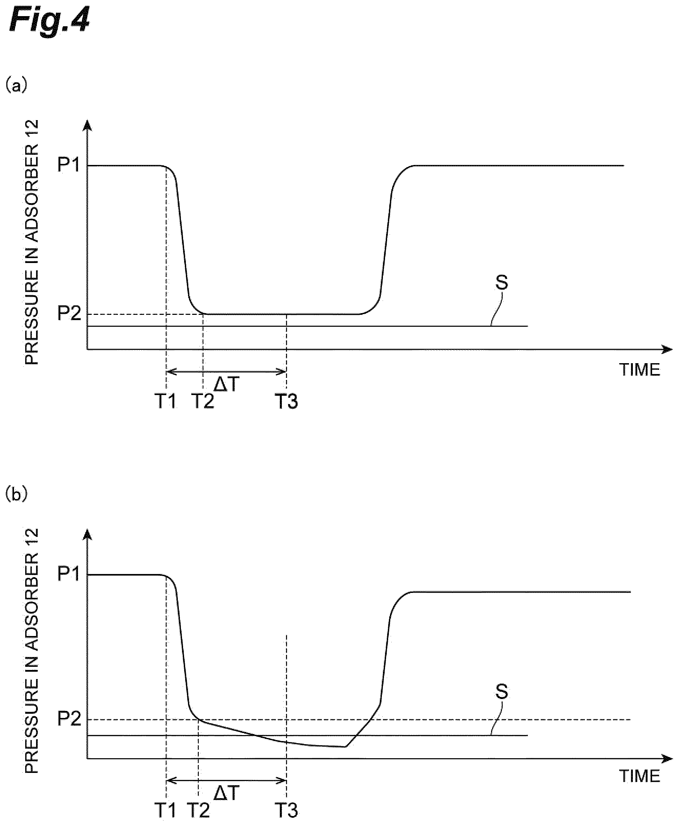

In processing at S4, the leakage determination unit 24 determines whether the pressure in the adsorber 12 detected by the pressure sensor 43 is lower than an abnormality determination threshold (S4). The abnormality determination threshold is, for example, a value lower than the pressure in the adsorber 12 when the reaction system reaches an equilibrium state in a normal condition where the NH₃ is not leaking from the reactor 11. If the heat generating reaction occurs in the normal condition, the equilibrium state is reached, for example, after approximately 10 seconds has elapsed after the solenoid valve 16 has opened. Consequently, the pressure in the adsorber 12 is maintained at a constant equilibrium pressure level after the abnormality determination time has elapsed after the solenoid valve 16 has opened (refer to FIG. 4(a)). Hence, the abnormality determination threshold is a value lower than the equilibrium pressure, and is, for example, a value lower by approximately 10% than the equilibrium pressure. The abnormality determination threshold has been verified in advance by, for example, an experiment. Details of the equilibrium pressure in the normal condition will be described later with reference to FIG. 4. The abnormality determination time is set as a time sufficiently longer than the time until the reaction system reaches the equilibrium state in the normal condition where the NH₃ is not leaking from the reactor.

If the pressure in the adsorber 12 is lower than the abnormality determination threshold after the abnormality determination time has elapsed after the solenoid valve 16 has opened (Yes at S4), the leakage determination unit 24 determines that the NH₃ is leaking from the reactor 11 (S5). Subsequently, the display output unit 25 outputs the determination result to the display unit 30 (S6), and the process ends. If, in contrast, the pressure in the adsorber 12 is equal to or higher than the abnormality determination threshold (No at S4), the leakage determination unit 24 determines that the NH₃ is not leaking from the reactor 11 (S7), and the process ends. The above-described operation of the controller 20 detects the leakage of the NH₃ from the reactor 11.

The following describes, with reference to FIG. 4, the pressure change in the adsorber 12 after the abnormality determination time has elapsed after the solenoid valve 16 has opened. FIG. 4 depicts graphs each illustrating the pressure change in the adsorber 12 after the abnormality determination time has elapsed after the solenoid valve 16 has opened. FIG. 4(a) illustrates a case in the normal condition where the NH₃ is not leaking from the reactor 11, and FIG. 4(b) illustrates a case in an abnormal condition where the NH₃ is leaking from the reactor 11. In the graphs of FIG 4, the abscissa represents time after the engine has started, and the ordinate represents the pressure in the adsorber 12. In the graphs of FIG. 4, T1 represents time when the solenoid valve 16 is opened; T2 represents time when the time (such as approximately 10 seconds) until the equilibrium state is reached has elapsed after the solenoid valve 16 has opened in the normal condition; and T3 represents time when an abnormality determination time ΔT (such as approximately 20 seconds) for determining the abnormality has elapsed after the solenoid valve 16 has opened.

As illustrated in FIG. 4(a), in the normal condition, the pressure in the adsorber 12 is kept at an initial pressure P1 after the engine has started until the solenoid valve 16 opens. From this state, when the solenoid valve 16 opens (that is, at time T1), the NH₃ in the adsorber 12 is moved by a pressure difference to the reactor 11, and the pressure in the adsorber 12 decreases. At time T2, the NH₃ stops moving from the adsorber 12 to the reactor 11, and the equilibrium state is reached. In other words, the pressure in the adsorber 12 and the pressure in the reactor 11 reach the same pressure. The pressure in the adsorber 12 in the equilibrium state in the normal condition is denoted as equilibrium pressure P2. In the normal condition, the pressure in the adsorber 12 is still kept at the equilibrium pressure P2 after time T2 has elapsed, and consequently, the equilibrium pressure P2 is maintained after the abnormality determination time AT has elapsed after the solenoid valve 16 has opened. A value lower, for example, by approximately 10% than the equilibrium pressure P2 is set as a threshold (abnormality determination threshold) S used for the above-described determination by the leakage determination unit 24. If, thereafter, the temperature of the exhaust gas reaches a recovery temperature or higher, the recovery reaction occurs in the reactor 11, and the NH₃ is desorbed from the reaction material 13. Consequently, the NH₃ moves from the reactor 11 to the adsorber 12 through the feed pipe 15 because the solenoid valve 16 is opened. As a result, the pressure in the adsorber 12 increases from the equilibrium pressure P2, and becomes constant again after reaching the initial pressure P1.

In the abnormal condition, as illustrated in FIG. 4(b), from the state of the initial pressure P1, when the solenoid valve 16 opens (that is, at time T1), the pressure in the adsorber 12 decreases until time T2 in the same manner as in the normal condition. However, in the abnormal condition where the NH₃ is leaking from the reactor 11, the reaction system constituted by the reactor 11 and the adsorber 12 does not reach the equilibrium state, and the pressure in the adsorber 12 continues decreasing even after the abnormality determination time ΔT has elapsed after the solenoid valve 16 has opened. Consequently, in the abnormal condition, the pressure in the adsorber 12 after the abnormality determination time ΔT has elapsed after the solenoid valve 16 has opened is lower than the abnormality determination threshold S set as described above. Based on the fact described above, the leakage determination unit 24 can detect the leakage of the NH₃ from the reactor 11 by determining whether the pressure in the adsorber 12 after the lapse of the abnormality determination time ΔT is lower than the abnormality determination threshold S set as described above.

As described above, when the heat generating reaction is performed in which the NH₃ is fed from the adsorber 12 to the reactor 11 through the feed pipe 15, the chemical heat storage apparatus 10 according to the present embodiment determines that the NH₃ is leaking from the reactor 11 if the pressure in the adsorber 12 is lower than the abnormality determination threshold S after the abnormality determination time ΔT has elapsed after the solenoid valve 16 has opened. In this manner, use of the pressure in the adsorber 12 as an indicator during the heat generating reaction enables the sure detection of the leakage of the NH₃ from the reactor 11.

In particular, conventional techniques have difficulty in detecting the NH₃ itself leaked out of the reactor 11 because the outside of the reactor 11 is an open system. For example, if the chemical heat storage apparatus 10 is mounted on the vehicle, the NH₃ leaked from the reactor 11 is diffused by a flow of air generated during traveling of the vehicle. In this case, a problem occurs that the NH₃ itself leaked out of the reactor 11 is difficult to be detected. In contrast, as described above, according to the present embodiment, the leakage of the NH₃ from the reactor 11 can be surely detected without detecting the externally leaked NH₃ itself.

According to the present embodiment, since the leakage of the NH₃ from the reactor 11 is detected using the pressure in the adsorber 12 detected by the pressure sensor 43, the leakage of the NH₃ from the reactor 11 can be easily detected using the pressure sensor 43 for calculating the NH₃ adsorption amount by the adsorption amount calculation unit 22, without separately providing a pressure sensor for detecting the pressure in the reactor 11.

According to the present embodiment, since the abnormality determination threshold S is a value lower than the equilibrium pressure P2 in the normal condition, the leakage of the NH₃ from the reactor 11 can be easily detected using the equilibrium pressure P2 as a reference.

### Second Embodiment

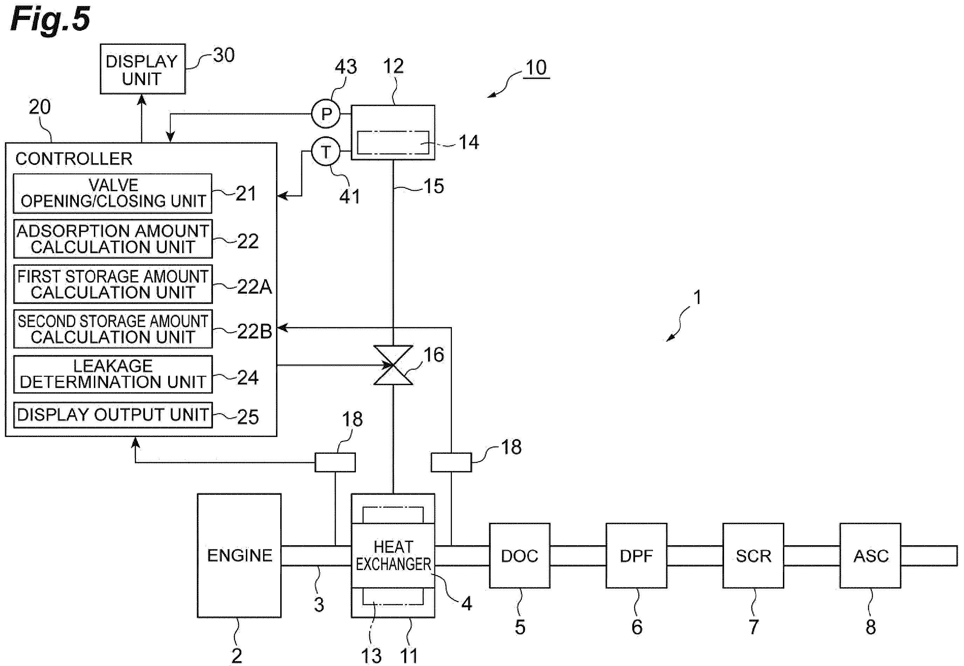

The following describes a second embodiment of one aspect of the present invention. FIG. 5 is a schematic configuration diagram illustrating the exhaust gas purification system apparatus according to the second embodiment of one aspect of the present invention. In FIG. 5, in the same manner as in the first embodiment described above, the exhaust gas purification system 1 is provided in the exhaust system of the engine 2, and purifies the exhaust gas emitted from the engine 2 of the harmful substances (environmental pollutants) contained in the exhaust gas.

In the same manner as in the first embodiment described above, the exhaust gas purification system 1 according to the present embodiment includes the heat exchanger 4, the DOC 5, the DPF 6, the SCR 7, and the ASC 8. In the same manner as in the first embodiment described above, the exhaust gas temperature sensors 18 are disposed on the upstream side and the downstream side of the heat exchanger 4 at the exhaust pipe 3. The configurations and the functions of the heat exchanger 4, the DOC 5, the DPF 6, the SCR 7, the ASC 8, and the exhaust gas temperature sensors 18 are the same as those in the first embodiment described above. The upstream side and the downstream side mentioned in the present embodiment refer to the upstream side and the downstream side in the direction of flow of the exhaust gas in the exhaust pipe 3.

In the same manner as in the first embodiment described above, the exhaust gas purification system 1 according to the present embodiment includes the chemical heat storage apparatus 10. The chemical heat storage apparatus 10 according to the present embodiment differs from that of the first embodiment described above in that the controller 20 includes a first storage amount calculation unit 22A and a second storage amount calculation unit 22B in addition to the valve opening/closing unit 21, the adsorption amount calculation unit 22, the leakage determination unit 24, and the display output unit 25. The configurations and the functions of the valve opening/closing unit 21, the adsorption amount calculation unit 22, the leakage determination unit 24, and the display output unit 25 are the same as those in the first embodiment described above.

Each of the first and second storage amount calculation units 22A and 22B calculates the amount of NH₃ adsorbed by the adsorbent 14 (NH₃ storage amount) in the adsorber 12 based on the temperature in the adsorber 12 indicated by the temperature information output from the temperature sensor 41 and the pressure in the adsorber 12 indicated by the pressure information output from the pressure sensor 43. The first storage amount calculation unit 22A calculates the NH₃ storage amount in the adsorber 12 when the solenoid valve 16 has closed after the NH₃ has been recovered from the reactor 11 into the adsorber 12. The second storage amount calculation unit 22B calculates the NH₃ storage amount in the adsorber 12 after a predetermined time has elapsed after the solenoid valve 16 has closed.

In the same manner as in the first embodiment described above, the leakage determination unit 24 determines whether the NH₃ is leaking from the reactor 11. In other words, the controller 20 performs the operation illustrated in FIG 3 to detect the leakage of the NH₃ from the reactor 11. In addition, based on the NH₃ storage amounts calculated by the respective first and second storage amount calculation units 22A and 22B, the leakage determination unit 24 determines whether the NH₃ is leaking from the adsorber 12. As a result, the leakage of the NH₃ from the adsorber 12 is detected. If the leakage determination unit 24 has determined that the NH₃ is leaking from the adsorber 12, the display output unit 25 outputs the determination result to, for example, the display unit 30 mounted on the vehicle. Since the information indicating the determination result output from the display output unit 25 is displayed on the display unit 30, the driver of the vehicle can become aware that the NH₃ is leaking from the adsorber 12.

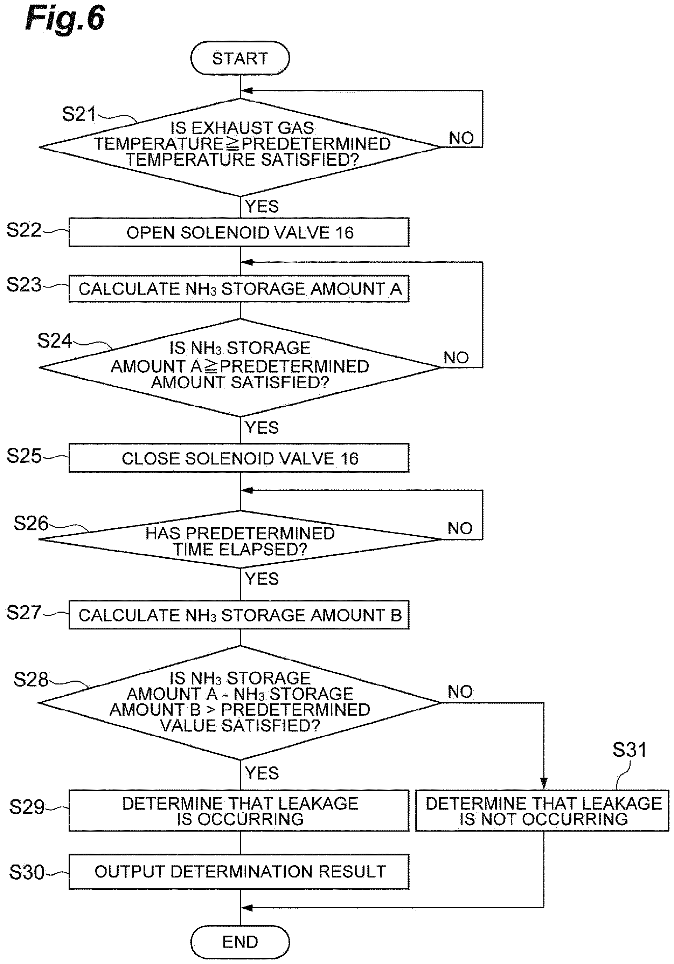

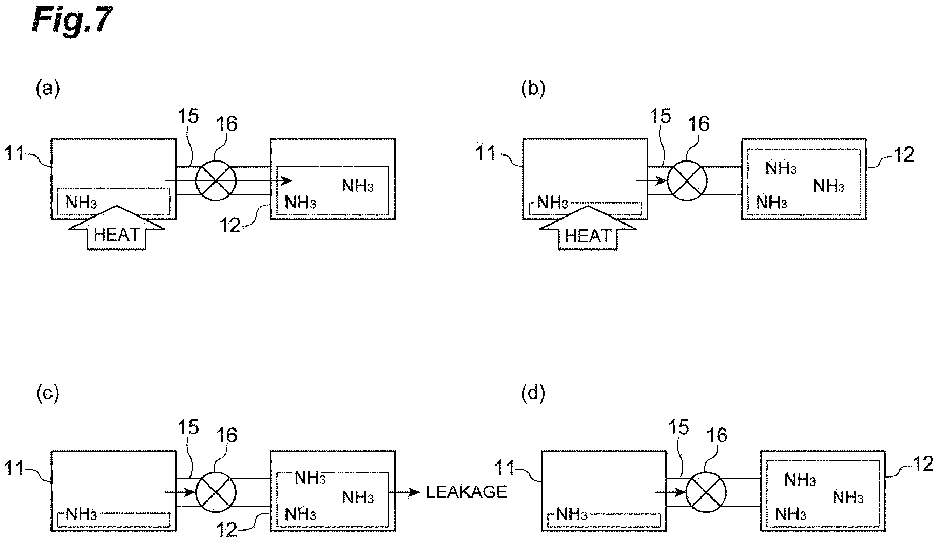

The following describes, with reference to FIGS. 6 and 7, the operation of the controller 20 to detect the leakage of the NH₃ from the adsorber 12 when the NH₃ has been recovered from the reactor 11 to the adsorber 12. FIG 6 is a flowchart illustrating a procedure of the controller 20 to detect the leakage of the NH₃ from the adsorber 12. FIG. 7 depicts conceptual diagrams illustrating the operation to detect the leakage of the NH₃ from the adsorber 12.

As illustrated in FIG 6, the valve opening/closing unit 21 first determines whether the temperature of the exhaust gas indicated by the temperature information output from the exhaust gas temperature sensors 18 is equal to or higher than a predetermined temperature (such as 260°C to 300°C) (S21). If the temperature of the exhaust gas is equal to or higher than the predetermined temperature (Yes at S21), the valve opening/closing unit 21 transmits the signal for opening the solenoid valve 16 to the solenoid valve 16 so as to open the solenoid valve 16 (S22; refer to FIG 7(a)). As a result, the NH₃ moves from the reactor 11 to the adsorber 12 through the feed pipe 15, and the pressure in the adsorber 12 increases. If, in contrast, the temperature of the exhaust gas is lower than the predetermined temperature (No at S21), the process returns to S21, and the valve opening/closing unit 21 repeats the determination at S21 until the temperature of the exhaust gas reaches the predetermined temperature or higher.

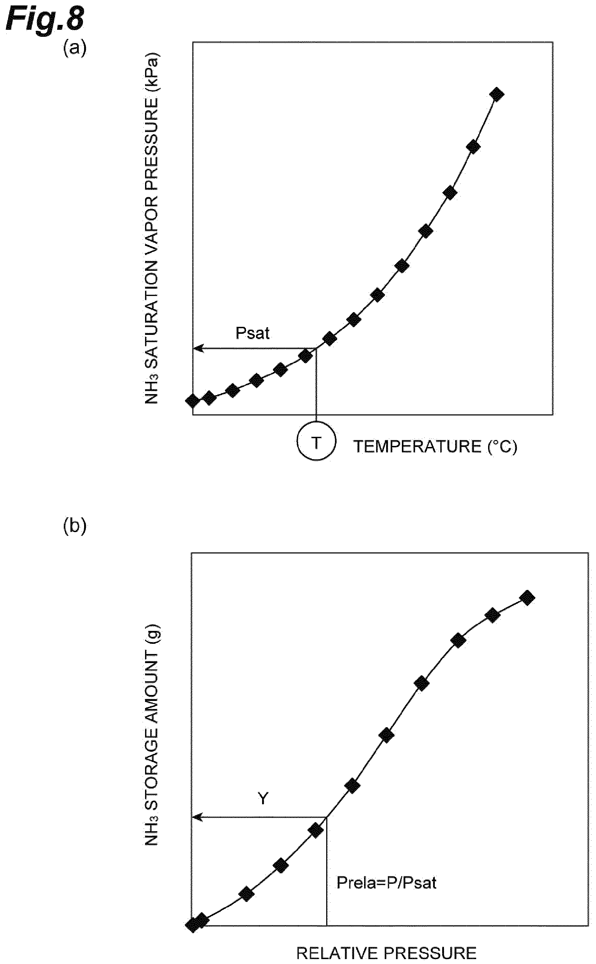

Subsequently to the processing at S22, the first storage amount calculation unit 22A calculates an NH₃ storage amount A in the adsorber 12 by being triggered by the recovery of the NH₃ from the reactor 11 into the adsorber 12 through the feed pipe 15 (S23). The NH₃ storage amount A is calculated based on the temperature and the pressure in the adsorber 12 and adsorption characteristics of the adsorbent 14. Details of the calculation method of the NH₃ storage amount A will be described later with reference to FIG 8.

Subsequently to the processing at S23, the valve opening/closing unit 21 determines whether the NH₃ storage amount A is equal to or larger than a predetermined amount (S24). The predetermined amount herein is, for example, a value lower by 10% to 20% than an ideal value set in advance as an amount of the NH₃ needed to fully react with the reaction material 13 in the reactor 11.

If the NH₃ storage amount A is equal to or larger than the predetermined amount (Yes at S24), the valve opening/closing unit 21 transmits, to the solenoid valve 16, a signal for closing the solenoid valve 16, causing the solenoid valve 16 to close (S25; refer to FIG. 7(b)). The NH₃ storage amount A at this time is, namely, equal to the predetermined amount described above. The NH₃ storage amount A at this time serves as a reference for determination described later by the leakage determination unit 24 as to whether the NH₃ is leaking from the adsorber 12. If, in contrast, the NH₃ storage amount A is smaller than the predetermined amount (No at S24), the process returns to S23, and the valve opening/closing unit 21 repeats the processing of S23 and S24 until the NH₃ storage amount reaches the predetermined amount or larger.

Subsequently to the processing at S25, the second storage amount calculation unit 22B determines whether the predetermined time (such as approximately 60 seconds) has elapsed after the solenoid valve 16 has closed after the NH₃ has been recovered (S26). If the predetermined time has elapsed after the solenoid valve 16 has closed (Yes at S26), the second storage amount calculation unit 22B calculates an NH₃ storage amount B in the adsorber 12 (S27). In the same manner as the NH₃ storage amount A, the NH₃ storage amount B is calculated based on the temperature and the pressure in the adsorber 12 and the adsorption characteristics of the adsorbent 14. If, in contrast, the predetermined time has not elapsed after the solenoid valve 16 has closed (No at S26), the process returns to S26, and the second storage amount calculation unit 22B repeats the determination at S26 until the predetermined time elapses.

Subsequently to the processing at S27, the leakage determination unit 24 calculates the difference between the NH₃ storage amount A that has been calculated by the first storage amount calculation unit 22A when the solenoid valve 16 has closed after the NH₃ has been recovered from the reactor 11 into the adsorber 12 and the NH₃ storage amount B that has been calculated by the second storage amount calculation unit 22B after the predetermined time has elapsed after the solenoid valve 16 has closed, and determines whether the difference is larger than a predetermined value (S28). The predetermined value referred to herein is, for example, a value of 10% of the NH₃ storage amount A. For example, if the NH₃ storage amount A is assumed to be 100 g, the predetermined value is set to 10 g that is the value of 10% of the NH₃ storage amount A. In this case, the difference between the NH₃ storage amount A and the NH₃ storage amount B is determined to be larger than the predetermined value if the NH₃ storage amount B has a value smaller than 90% of the NH₃ storage amount A, that is, smaller than 90 g.

If the difference between the NH₃ storage amount A and the NH₃ storage amount B is larger than the predetermined value (Yes at S28), the leakage determination unit 24 determines that the NH₃ is leaking from the adsorber 12 (S29; refer to FIG 7(c)). Subsequently, the display output unit 25 outputs the determination result to the display unit 30 (S30), and the process ends. If, in contrast, the difference between the NH₃ storage amount A and the NH₃ storage amount B equal to or smaller than the predetermined value (No at S28), the leakage determination unit 24 determines that the NH₃ is not leaking from the adsorber 12 (S31; refer to FIG 7(d)), and the process ends. The above-described operation of the controller 20 detects the leakage of the NH₃ from the adsorber 12.

The following describes, with reference to FIG 8, the calculation method of the NH₃ storage amounts A and B performed by the first and second storage amount calculation units 22A and 22B. FIG 8 depicts diagrams illustrating the calculation method of the NH₃ storage amounts performed by the first and second storage amount calculation units 22A and 22B. FIG 8(a) is a graph illustrating a relation between the temperature in the adsorber 12 and the saturation vapor pressure of the NH₃, with the abscissa representing the temperature (°C) in the adsorber 12 and the ordinate representing the saturation vapor pressure (kPa) of the NH₃. FIG 8(b) is a graph illustrating a relation of the NH₃ storage amount with respect to the relative pressure of the adsorbent 14 disposed in the adsorber 12, with the abscissa representing the relative pressure and the ordinate representing the NH₃ storage amount (g). The relative pressure refers to the pressure in the adsorber 12 relative to the saturation vapor pressure of the NH₃. The NH₃ storage amount with respect to the relative pressure of the adsorbent 14 has been experimentally obtained in advance.

The relations illustrated in FIGS. 8(a) and 8(b) have been set in advance in the controller 20. Each of the first and second storage amount calculation units 22A and 22B uses the relations to calculate the NH₃ storage amount. Specifically, each of the first and second storage amount calculation units 22A and 22B first uses the relation illustrated in FIG 8(a) to calculate saturation vapor pressure Psat of the NH₃ based on a temperature T in the adsorber 12 indicated by the temperature information output from the temperature sensor 41. Subsequently, based on the calculated saturation vapor pressure Psat of the NH₃ and pressure P in the adsorber 12 indicated by the pressure information output from the pressure sensor 43, each of the first and second storage amount calculation units 22A and 22B calculates relative pressure Prela (= P/Psat) serving as a ratio of the pressure P to the saturation vapor pressure Psat. Based on the calculated relative pressure Prela, each of the first and second storage amount calculation units 22A and 22B calculates the NH₃ storage amount using the relation illustrated in the graph of FIG. 8(b). In the manner as described above, each of the first and second storage amount calculation units 22A and 22B calculates the NH₃ storage amount.

As described above, the chemical heat storage apparatus 10 according to the present embodiment can surely detect the leakage of the NH₃ from the reactor 11 in the same manner as that according to the first embodiment. Furthermore, the chemical heat storage apparatus 10 according to the present embodiment determines that the NH₃ is leaking from the adsorber 12 if the NH₃ storage amount B calculated after the predetermined time has elapsed after the solenoid valve 16 has closed is smaller, by the predetermined value or more, than the NH₃ storage amount A calculated when the solenoid valve 16 has closed after the NH₃ has been recovered from the reactor 11 into the adsorber 12 through the feed pipe 15. In this manner, use of the difference in the NH₃ storage amount in the adsorber 12 as an indicator enables the sure detection of the leakage of the NH₃ from the adsorber 12.

In particular, the conventional techniques have difficulty in detecting the NH₃ itself leaked out of the adsorber 12 because the outside of the adsorber 12 is an open system. For example, if the chemical heat storage apparatus 10 is mounted on the vehicle, the NH₃ leaked from the adsorber 12 is diffused by a flow of air generated during traveling of the vehicle. In this case, a problem occurs that the NH₃ itself leaked out of the adsorber 12 is difficult to be detected. In contrast, as described above, according to the present embodiment, the leakage of the NH₃ from the adsorber 12 can be surely detected without detecting the externally leaked NH₃ itself.

According to the present embodiment, since the NH₃ storage amount is calculated taking into account variations in both the temperature T and the pressure P in the adsorber 12, the NH₃ storage amount can be correctly calculated. As a result, the leakage of the NH₃ from the adsorber 12 can be surely detected.

Each of the first and second storage amount calculation units 22A and 22B calculates the saturation vapor pressure Psat of the NH₃ based on the temperature T in the adsorber 12 detected by the temperature sensor 41, and calculates the NH₃ storage amount based on the relative pressure Prela between the calculated saturation vapor pressure Psat and the pressure P in the adsorber 12 detected by the pressure sensor 43. Consequently, the NH₃ storage amount can be easily calculated based on the temperature T and the pressure P in the adsorber 12.

While the various embodiments of the present invention have been described above, the present invention is not limited to the embodiments described above, and may be modified within the scope not changing the gist described in the claims, or may be applied to other embodiments.

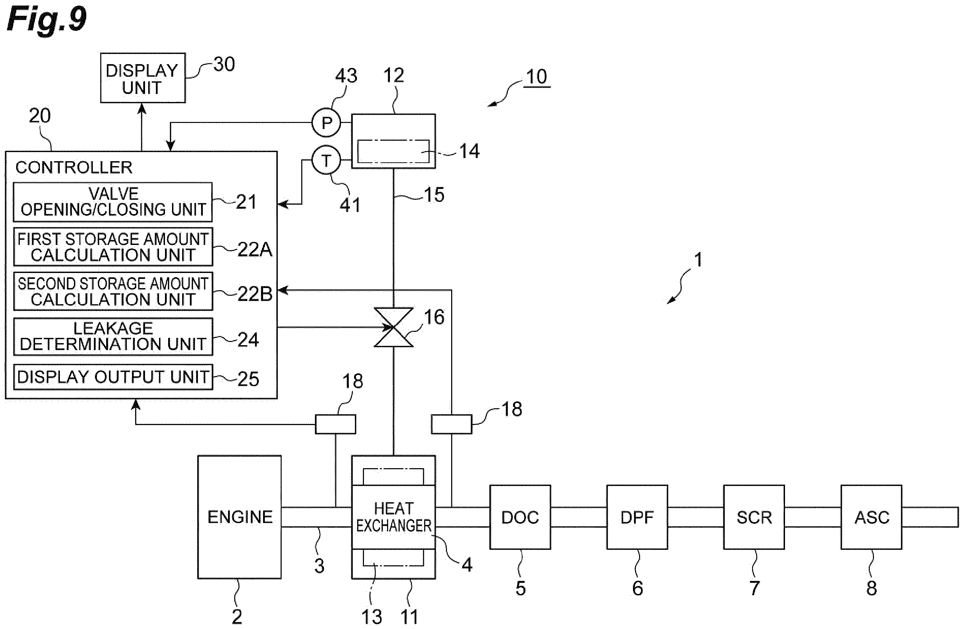

FIG. 9 is a schematic configuration diagram illustrating the exhaust gas purification system including the chemical heat storage apparatus according to another embodiment of the present invention. As illustrated in FIG. 9, the controller 20 in the chemical heat storage apparatus 10 according to the other embodiment may include the first and second storage amount calculation units 22A and 22B without including the adsorption amount calculation unit 22. The leakage determination unit 24 may detect the leakage of the NH₃ from the adsorber 12 without detecting the leakage of the NH₃ from the reactor. For example, the procedure of the controller 20 to detect the leakage of the NH₃ from the adsorber 12 and the calculation method of the NH₃ storage amounts A and B performed by the first and second storage amount calculation units 22A and 22B in the other embodiment are the same as those in the second embodiment. According to the other embodiment, the leakage of the NH₃ from the adsorber 12 can be surely detected regardless of whether the leakage of the NH₃ from the reactor 11 is detected.

In the embodiments described above, the pressure sensor 43 is used to detect the leakage of the NH₃ from the reactor 11. However, a pressure sensor for detecting the pressure in the reactor 11 may be separately provided in addition to the pressure sensor 43.

Each of the first and second storage amount calculation units 22A and 22B may calculate, for example, an NH₃ recovery rate instead of the NH₃ storage amount, and the leakage determination unit 24 may determine whether the NH₃ is leaking from the adsorber 12 based on the calculated NH₃ recovery rate. The NH₃ recovery rate refers to a percentage of an amount of the NH₃ recovered into the adsorber 12 relative to a reference value (100%), the reference value being defined, for example, as an amount of the NH₃ needed to fully react with the reaction material 13 in the reactor 11.

The exhaust gas temperature sensors 18 are not limited to being located on the upstream side and the downstream side of the heat exchanger 4 at the exhaust pipe 3, but may be disposed at any locations of the exhaust pipe 3. Instead of or in addition to the exhaust gas temperature sensors 18, a heater temperature sensor may be provided in the reactor 11, and the valve opening/closing unit 21 may control the open/close state of the solenoid valve 16 based on the temperature of the reactor 11 detected by the heater temperature sensor.

In the embodiments described above, the information indicating the determination result output from the display output unit 25 is displayed on the display unit 30, and thereby, the driver of the vehicle becomes aware that the NH₃ is leaking from the adsorber 12 or the reactor 11. The method for notifying the driver of the leakage of the NH₃ from the adsorber 12 or the reactor 11 is not limited to this method. The driver may be notified of the leakage of the NH₃ from the adsorber 12 or the reactor 11 through, for example, a voice or a buzzer.

The reaction medium introduced into the reactor 11 is not limited to the NH₃, but may be, for example, H₂O, alcohol, or CO₂. For example, CaO, MnO, CuO, or Al₂O₃ is used as the reaction material to react with the H₂O.

In the embodiments described above, the exhaust gas is heated through the heat exchanger 4 provided in the exhaust system of the diesel engine 2. The present invention, however, is not limited to these embodiments, but may be embodied as an apparatus that heats the exhaust gas through a heat exchanger provided in an exhaust system of a gasoline engine, or as an apparatus that heats a heat medium through a heat exchanger provided outside the exhaust system of the engine. A catalyst coating layer may be formed partially or totally on the surface of the heat exchanger provided in the exhaust system of the engine. In other words, the chemical heat storage apparatus may be configured to directly warm up the catalyst, instead of warming up the catalyst through the heat exchanger.

Moreover, the object to be heated by the chemical heat storage apparatus according to one aspect of the present invention is not limited to the heat exchanger provided in the exhaust system of the engine, but may be the catalyst or the exhaust pipe itself in which the exhaust gas flows. Besides, the reactor of the chemical heat storage apparatus can also be applicable to heating of, for example, piping provided in an oil circulation system other than the exhaust system of the engine. Furthermore, the reactor of the chemical heat storage apparatus may heat any of various types of heat media in the vehicle, such as engine oil, transmission oil, cooling water, and air. In this case, the reactor of the chemical heat storage apparatus may be disposed at an outer circumferential portion (a part or the entire circumference of the outer circumferential portion) of a heat medium flow path conducting the heat medium so as to heat the heat medium flow path itself. The heat exchanger may be disposed in the heat medium flow path conducting the heat medium, and the reactor disposed at the outer circumferential portion of the heat medium flow path may heat the heat medium through the heat exchanger.

A plurality of reaction units including reaction materials and heat exchanging units such as heat exchanging fins may be arranged in an alternately overlapping manner to constitute a heat exchanger-integrated reactor, and the heat exchanger-integrated reactor may be disposed in a heat medium storage unit storing a heat medium, or on a heat medium flow path conducting the heat medium. Furthermore, one aspect of the present invention is applicable to a chemical heat storage apparatus disposed to a portion other than the engine.

### Reference Signs List

10 Chemical heat storage apparatus, 11 Reactor, 12 Adsorber (reservoir), 13 Reaction material, 15 Feed pipe, 16 Solenoid valve (valve), 22A First storage amount calculation unit, 22B Second storage amount calculation unit, 24 Leakage determination unit, 41 Temperature sensor, 43 Pressure sensor, S Abnormality determination threshold, ΔT Abnormality determination time.

## Claims

1. A chemical heat storage apparatus comprising:
a reactor including a reaction material configured to generate heat by chemically reacting with a reaction medium and to desorb the reaction medium by storing heat;
a reservoir configured to store the reaction medium;
a feed pipe connecting the reactor with the reservoir;
a valve provided in the feed pipe and configured to open and close a flow path of the reaction medium;
a pressure sensor configured to detect pressure in the reservoir; and
a leakage determination unit configured to determine whether the reaction medium is leaking from the reactor based on the pressure in the reservoir detected by the pressure sensor, wherein
the leakage determination unit is configured to determine that the reaction medium is leaking from the reactor when the pressure in the reservoir detected by the pressure sensor is lower than an abnormality determination threshold after an abnormality determination time has elapsed after the valve has opened to perform a heat generating reaction in which the reaction medium is fed from the reservoir to the reactor.

2. The chemical heat storage apparatus according to claim 1, wherein
the abnormality determination threshold is set to a value lower than the pressure in the reservoir when the reaction system reaches an equilibrium state in a normal condition where the reaction medium is not leaking from the reactor, and
the abnormality determination time is set as a time longer than a time until the reaction system reaches the equilibrium state in the normal condition where the reaction medium is not leaking from the reactor.

3. The chemical heat storage apparatus according to claim 1 or 2, further comprising:
a first storage amount calculation unit configured to calculate a storage amount of the reaction medium in the reservoir when the valve has closed after the reaction medium has been recovered from the reactor into the reservoir;
a second storage amount calculation unit configured to calculate the storage amount of the reaction medium in the reservoir after a predetermined time has elapsed after the valve has closed; and
a leakage determination unit configured to determine whether the reaction medium is leaking from the reservoir based on the storage amounts of the reaction medium calculated by the respective first and second storage amount calculation units, wherein
the leakage determination unit is configured to calculate a difference between the storage amount of the reaction medium calculated by the first storage amount calculation unit and the storage amount of the reaction medium calculated by the second storage amount calculation unit, and to determine that the reaction medium is leaking from the reservoir when the value of the difference is larger than a predetermined value.

4. The chemical heat storage apparatus according to claim 3, comprising:
a temperature sensor configured to detect a temperature in the reservoir; and
a pressure sensor configured to detect the pressure in the reservoir, wherein
each of the first and second storage amount calculation units is configured to calculate the storage amount of the reaction medium based on the temperature in the reservoir detected by the temperature sensor and the pressure in the reservoir detected by the pressure sensor.

5. The chemical heat storage apparatus according to claim 4, wherein each of the first and second storage amount calculation units is configured to calculate saturation vapor pressure of the reaction medium based on the temperature in the reservoir detected by the temperature sensor, and to calculate the storage amount of the reaction medium based on relative pressure between the saturation vapor pressure and the pressure in the reservoir detected by the pressure sensor.
